# EUROPÄISCHE PATENTANMELDUNG

(11) **EP 3 654 012 A1**
(43) Veröffentlichungstag der Anmeldung: **20.05.2020**
(21) Anmeldenummer: 19219834.9
(22) Anmeldetag: 25.02.2019
(51) Int. Cl.: G01N 1/31, G01N 35/00

(54) **EINDECKAUTOMAT**

(30) Priorität: 01.03.2018 DE 102018104709
(62) Teilanmeldung aus: 19707775.3
(71) Anmelder: Leica Biosystems Nussloch GmbH, 69226 Nussloch (DE)
(72) Erfinder: Sharpe, Markus, 69117 Heidelberg (DE); Siehl, Benjamin, 69226 Nußloch (DE); Wittmann, Markus, 69126 Heidelberg (DE)
(74) Vertreter: Hoffmann, Jürgen

(57) **Zusammenfassung**

System, das zwei Automaten zum Bearbeiten oder Untersuchen von biologischen Proben beinhaltet. Die Automaten sind in der Weise verbunden, dass elektrische Energie aus einem Energiespeicher (12) eines der Automaten zu dem anderen Automaten im Bedarfsfall übertragbar ist.

## Beschreibung

Die Erfindung betrifft einen Eindeckautomaten, der dazu ausgebildet ist, zur Versorgung mit elektrischer Energie als Verbraucher an ein elektrisches Stromnetz angeschlossen zu werden und der Objektträger mit darauf befindlichen Proben einem Objektträgermagazin entnimmt und jeweils einen Eindeckprozess durchführt, bei dem auf jeden Objektträger ein Einschlussmittel und anschließend ein Deckglas aufgebracht wird, und der die eingedeckten Objektträger in dem Objektträgermagazin oder in einem weiteren Objektträgermagazin ablegt.

In einem Pathologischen Labor wird zur Probenbearbeitung eine Vielzahl von Geräten verwendet. Hierbei kommen insbesondere Automaten zum Einsatz.

Zunächst werden die biologischen Proben fixiert, dehydriert und mit Paraffin infiltriert. Dies geschieht zumeist unter Verwendung eines sog. Prozessors. Bei der Behandlung in einem Prozessor befindet sich die biologische Probe zumeist in einer geschlossenen Kassette mit kleinen Öffnungen zum Flüssigkeitsaustausch. Oftmals werden mehrere Kassetten in Behältern zusammengefasst und gleichzeitig bearbeitet. Ein Prozessor ist beispielsweise in der US 7,722,811 B2 dargestellt und beschrieben. Die Behandlung der Proben findet bei diesem Prozessor in einer Retorte statt, in die verschiedene Chemikalien gepumpt werden.

Nach dem Infiltrieren von Paraffin in die Probe erfolgt eine Einbettung der Probe in einen Paraffinblock. Dies kann insbesondere in einem Einbettautomaten erfolgen, wie er beispielsweise in US 9,671,322 B2 dargestellt und beschrieben ist.

Nach dem Einbetten der Probe in einen Paraffinblock erfolgt eine Weiterbearbeitung mittels eines Mikrotoms, mit dem der Paraffinblock samt der eingeschlossenen Probe in dünne Scheiben, sogenannte Dünnschnitte, geschnitten wird, die einzeln auf jeweils einen Objektträger aufgebracht werden. Ein Mikrotom ist beispielsweise in US 7,273,000 B2 dargestellt und beschrieben. Zumeist wird der zu schneidende Paraffinblock in einen Objekthalter des Mikrotoms eingespannt, der eine Auf- und Abbewegung vollzieht und dabei die Probe über ein Mikrotommesser führt. Dabei entstehen Dünnschnitte der Probe, die auf jeweils einen Objektträger aufgebracht und anschließend üblicher Weise in einem Färbegerät weiter bearbeitet werden können. Ein Färbegerät ist beispielsweise aus US 6,821,072 B2 bekannt. Beim Färbeprozess durchläuft jeder Objektträger mehrere Bäder mit Reagenzien.

Nach dem Abschluss des Färbeprozesses wird der auf dem Objektträger befindliche, gefärbte Dünnschnitt mit einem Deckglas abgedeckt. Dies kann insbesondere in einem Eindeckautomaten geschehen. Ein Eindeckautomat ist ebenfalls in US 6,821,072 B2 dargestellt und beschrieben. Bei der aus US 6,821,072 B2 bekannten Vorrichtung sind beide Geräte, nämlich das Färbegerät und der Eindeckautomat, über eine Transferstation miteinander verbunden.

Im Eindeckautomaten wird zunächst ein flüssiges Einschlussmittel mittels einer Hohlnadel auf den gefärbten Dünnschnitt aufgetragen und darauf das Deckglas platziert. Zumeist werden adhäsive Einschlussmittel verwendet, die als Kleber wirken und daher im Laborjargon auch als "Kleber" bezeichnet werden. Anschließend muss das Einschlussmittel trocknen, um ein Verschieben des Deckglases auf dem Objektträger zu verhindern. Die gefärbten und eingedeckten Proben auf den Objektträgern werden anschließend mit einem Mikroskop oder einer mikroskopischen Scanningeinrichtung für eine Diagnose betrachtet. Eine Scanningeinrichtung ist in der US 7,133,543 B2 dargestellt und beschrieben.

Während der geschilderten Prozesse werden zumeist mehrere Objektträger übereinander oder nebeneinander in transportable Objektträgermagazinen, die auch Racks genannt werden, zusammengefasst. Diese durchlaufen dann den jeweiligen Prozess in den verschiedenen Geräten.

Insbesondere in einem Eindeckautomaten kann es im Falle eines Stromausfalls zu Schäden an den Proben oder auch an dem Eindeckautomaten kommen.

Es ist daher die Aufgabe der vorliegenden Erfindung, einen Eindeckautomaten anzugeben, bei dem im Falle einer Störung der Netzstromversorgung zumindest Schäden an den Proben weitgehend ausgeschlossen sind.

Die Aufgabe wird durch einen Eindeckautomaten der eingangs genannten Art gelöst, der gekennzeichnet ist durch einen elektrischen Energiespeicher und eine elektronische Steuerungsvorrichtung, die Störungen der Versorgung aus dem Stromnetz mit elektrischer Energie detektiert und im Falle einer Störung auf eine Entnahme von elektrischer Energie aus dem elektrischen Energiespeicher umschaltet und die eine Sicherheitsroutine durchführt, welche zumindest die Sicherheitsschritte beinhaltet, bereits mit dem Einschlussmittel versehene Objektträger fertig einzudecken und anschließend in dem Objektträgermagazin oder in dem weiteren Objektträgermagazin abzulegen.

In erfindungsgemäßer Weise wurde erkannt, dass es zu ganz gravierenden Schäden an Proben und/oder an einem Eindeckautomaten kommen kann, wenn der laufende Betrieb durch einen Stromausfall plötzlich unterbrochen wird. Insbesondere wurde erkannt, dass es zu Schäden insbesondere auf Grund eines Eintrocknens von Einschlussmittel an oder in Komponenten des Eindeckautomaten oder auf Proben, auf die noch kein Deckglas aufgelegt wurde, kommen kann.

Außerdem wurde erkannt, dass es zu Schäden kommen kann, wenn der Eindeckautomat in einem willkürlichen und undefinierten Betriebszustand stoppt. Dies insbesondere, wenn ein Wiederanlaufen aus diesem Zustand nicht möglich ist, weil beispielsweise Parameterwerte, die, insbesondere innerhalb einer Steuerungssoftware, zur Steuerung oder zur Identifizierung der einzelnen Proben erforderlich sind, verloren gehen oder ein Wiederanlaufen aus mechanischen Gründen verhindert ist. Es ist nachteiliger Weise auch möglich, dass es zu Schäden kommt oder der Eindeckautomat in einen Zustand gerät, aus dem ein Wiederanlaufen nicht möglich ist, wenn der Benutzer versucht, durch Demontieren von Teilen des in im undefinierten Betriebszustand angehaltenen Eindeckautomaten an die in Bearbeitung befindliche Proben zu kommen, um diese zu entnehmen.

Die Erfindung vermeidet ein plötzliches Anhalten des Eindeckautomaten im Falle einer Störung der Energieversorgung aus dem Stromnetz. Hierbei ist erfindungsgemäß vorgesehen, dass eine intelligente Sicherheitsroutine durchgeführt wird, welche zumindest die Sicherheitsschritte beinhaltet, bereits mit Einschlussmittel versehene Objektträger fertig einzudecken und anschließend in dem Objektträgermagazin oder in dem weiteren Objektträgermagazin abzulegen, und die insbesondere weitere Sicherheitsschritte beinhalten kann, wie beispielsweise das vorübergehende Abschalten akut nicht benötigter Komponenten und das Durchführen von Maßnahmen zum Schutz von Komponenten des Eindeckautomaten, was weiter unten im Detail beschrieben ist.

Beispielsweise kann die Sicherheitsroutine als weiteren Sicherheitsschritt beinhalten, dem Objektträgermagazin entnommene und noch nicht mit Einschlussmittel versehene Objektträger zurück in das Objektträgermagazin zu verbringen. Insbesondere kann vorteilhaft vorgesehen sein, dass das Objektträgermagazin anschließend an eine Ausgabe, beispielsweise eine Ausgabeschublade, überführt wird, aus der es der Benutzer entnehmen kann. Auf diese Weise ist es dem Benutzer beispielsweise ermöglicht, die mit Dünnschnitten versehenen Objektträger manuell einzudecken.

Der Eindeckautomat kann vorteilhaft eine Hohlnadel aufweisen, die an einen Vorratsbehälter mit Einschlussmittel angeschlossen ist und durch die hindurch jeweils eine vorbestimmte Menge an Einschlussmittel auf den Objektträger aufgebracht werden kann, wobei die Hohlnadel beim Aufbringen relativ zum Objektträger, vorzugsweise entlang der Längserstreckungsachse des Objektträgers, bewegt wird. Um zu vermeiden, dass Einschlussmittel in der Hohlnadel eintrocknet und die Hohlnadel verstopft, kann die Sicherheitsroutine als weiteren Sicherheitsschritt vorteilhaft beinhalten, die zum Aufbringen von Einschlussmittel dienende Hohlnadel in ein Lösungsmittelbad einzutauchen. Bei dem Lösungsmittel kann es sich beispielsweise Xylol handeln. Da es, wie bereits erwähnt, von Vorteil ist, wenn die Hohlnadel motorisch beweglich angeordnet ist, um das Einschlussmittel auf den Objektträger aufzubringen, ist es vorteilhaft einfach umsetzbar, die motorisch gesteuerte Beweglichkeit der Hohlnadel derart auszubilden, dass zusätzlich auch ein Eintauchen in ein Lösungsmittelbad ermöglicht ist.

Wie bereits erwähnt, ist erfindungsgemäß vorgesehen, bereits mit Einschlussmittel versehene Objektträger fertig einzudecken und anschließend in dem Objektträgermagazin oder in dem weiteren Objektträgermagazin abzulegen. Auf diese Weise ist vorteilhaft vermieden, dass bereits aufgebrachtes Einschlussmittel eintrocknet, bevor ein Deckglas aufgelegt wurde. Die Sicherheitsroutine kann vorteilhaft als weiteren Sicherheitsschritt beinhalten, das weitere Objektträgermagazin anschließend zur Entnahme durch den Benutzer an eine Ausgabe, beispielsweise eine Ausgabeschublade, zu überführen. Dies hat den besonderen Vorteil, dass der Benutzer die fertig eingedeckten Objektträger trotz der Störung der elektrischen Stromversorgung aus dem Eindeckautomaten entnehmen kann.

Insbesondere um den Energiespeicher des Eindeckautomaten zu schonen, kann die Sicherheitsroutine beinhalten, während der Durchführung der Sicherheitsschritte wenigstens einen Energieverbraucher des Eindeckautomaten abzuschalten, der nicht zur Durchführung wenigstens eines Sicherheitsschritts erforderlich ist. Beispielsweise ist es möglich, während der Durchführung der Sicherheitsroutine ein Display, eine Heizeinrichtung, eine Pumpe oder eine Transporteinrichtung bis zur Beendigung der Sicherheitsroutine oder für kürzere Zeitabschnitte während des Ablaufs der Sicherheitsroutine abzuschalten, wenn diese Verbraucher für die Durchführung der Sicherheitsschritte der Sicherheitsroutine oder zur Aufrechterhaltung der für die Erhaltung der Probe wichtigen Umgebungsparameter nicht zwingend benötigt werden. Auf diese Weise wird vorteilhaft eine längere Energiespeicherlaufzeit erreicht und gleichzeitig vermieden, übermäßig große Energiespeicher einbauen zu müssen um zu gewährleisten, dass bei einem Ausfall der elektrischen Netzversorgung genügend Energie zur Verfügung steht, damit die Sicherheitsroutine zuverlässig bis zum Ende durchgeführt werden kann.

Die Steuerungsvorrichtung ist vorzugsweise derart ausgebildet, dass sie bei einer Störung der Netzversorgung mit elektrischer Energie ohne Unterbrechung auf eine Entnahme von elektrischer Energie aus dem elektrischen Energiespeicher umschaltet. Eine solche Ausführung hat den ganz besonderen Vorteil, dass auch sehr kurze Unterbrechungen des Betriebs des Eindeckautomaten wirkungsvoll vermieden sind, weil auch solche Unterbrechungen zu Schäden führen können, beispielsweise wenn ein Wiederanfahren des Eindeckautomaten nach einer solchen kurzen Unterbrechung nicht ohne weitere Eingriffe nicht möglich ist.

Vorzugsweise beinhaltet die Sicherheitsroutine, die Komponenten des Eindeckautomaten in einen Zustand zu überführen, aus dem ein Wiederanfahren im Normalbetrieb beschädigungsfrei möglich ist. Hierbei kann vorteilhaft insbesondere auch vorgesehen sein, dass für die Bearbeitung der Proben wichtige Bearbeitungsparameter und/oder Daten zur Identifizierung der einzelnen Objektträger in einem, insbesondere nicht flüchtigen, Datenspeicher abgelegt werden, um bei einem Wiederanfahren auf diese Daten zurückgreifen zu können. Dabei können die Daten zur Identifizierung der Objektträger insbesondere die bereits eingedeckten Objektträger betreffen, so dass nach einem Wiederanfahren im Normalbetrieb zuverlässig nur die nicht eingedeckten in dem Eindeckautomaten eingedeckt werden.

Im Normalbetrieb wird die erforderliche Energie zum Durchführen der zum Eindecken erforderlichen Schritte dann wieder dem elektrischen Stromnetz entnommen, an das der Eindeckautomat angeschlossen ist.

Bei einer besonderen Ausführung ist vorgesehen, dass der Eindeckautomat nach dem Durchführen der Sicherheitsroutine in einen Normalbetrieb zurückschaltbar ist, wobei die Steuerungsvorrichtung ein Zurückschalten jedoch nur zulässt, wenn keine Störung der Versorgung aus dem Stromnetz mit elektrischer Energie mehr vorliegt und/oder wenn der elektrische Energiespeicher einen vorbestimmten oder vorbestimmbaren Mindestladezustand aufweist. Insbesondere kann vorteilhaft vorgesehen sein, dass die Steuerungsvorrichtung nach Durchführen der Sicherheitsroutine automatisch in einen Normalbetrieb zurückschaltet, wenn sie detektiert, dass keine Störung der Versorgung aus dem Stromnetz mit elektrischer Energie mehr vorliegt.

Besonders sicher und zuverlässig ist eine Ausführung des erfindungsgemäßen Eindeckautomaten, bei der ein Wiederanfahren im Normalbetrieb nur dann möglich ist, wenn der elektrische Energiespeicher einen vorbestimmten oder vorbestimmbaren Mindestladezustand aufweist. Diese Ausführung hat den besonderen Vorteil, dass gewährleistet ist, die Sicherheitsroutine erneut ausführen zu können, wenn eine weitere Störung der Netzstromversorgung eintreten sollte.

Ganz besonders vorteilhaft ist eine Ausführung des Eindeckautomaten, bei dem die Steuerungsvorrichtung nach Durchführen der Sicherheitsroutine automatisch in einen Normalbetrieb zurückschaltet, wenn sie detektiert, dass keine Störung der Versorgung aus dem Stromnetz mit elektrischer Energie mehr vorliegt, und der elektrische Energiespeicher einen vorbestimmten oder vorbestimmbaren Mindestladezustand aufweist. Der Mindestladezustand ist hierbei vorzugsweise so bemessen, dass die Sicherheitsroutine im Falle eines erneuten Ausfalls der Netzstromversorgung zuverlässig durchgeführt werden kann.

In einem pathologischen Labor kommt zumeist, wie eingangs geschildert, eine Vielzahl von Geräten zum Bearbeiten und Analysieren von biologischen Proben zum Einsatz. Vor diesem Hintergrund ist ein System von ganz besonders vorteilhaft, das einen erfindungsgemäßen Eindeckautomaten und einen weiteren Automaten zum Bearbeiten oder Untersuchen von biologischen Proben beinhaltet, der ebenfalls dazu ausgebildet ist, zur Versorgung mit elektrischer Energie als Verbraucher an ein elektrisches Stromnetz angeschlossen zu werden, wobei der Eindeckautomat und der weitere Automat in der Weise elektrisch verbunden oder verbindbar sind, dass elektrische Energie aus dem Energiespeicher des Eindeckautomaten zu dem weiteren Automaten übertragbar ist und/oder dass elektrische Energie von dem weiteren Automaten zu dem Eindeckautomaten übertragbar ist.

Ein solches System hat den ganz besonderen Vorteil, dass im Bedarfsfall elektrische Energie an den weiteren Automaten übertragen werden kann, beispielsweise damit dort eine Sicherheitsroutine ausgeführt werden kann.

Es ist ganz allgemein und nach einem eigenständigen Erfindungsgedanken ein Automat zum Bearbeiten oder Untersuchen von biologischen Proben besonders vorteilhaft, der dazu ausgebildet ist, zur Versorgung mit elektrischer Energie als Verbraucher an ein elektrisches Stromnetz angeschlossen zu werden und der Proben einem Magazin entnimmt und jeweils einen Bearbeitungsprozess durchführt, bei dem wenigstens ein Bearbeitungsschritt durchgeführt wird, und der die bearbeitete Probe anschließend in dem Magazin oder in einem weiteren Magazin ablegt, wobei der Automat einen elektrischen Energiespeicher und eine elektronische Steuerungsvorrichtung aufweist, die Störungen der Versorgung aus dem Stromnetz mit elektrischer Energie detektiert und im Falle einer Störung auf eine Entnahme von elektrischer Energie aus dem elektrischen Energiespeicher umschaltet und die eine Sicherheitsroutine durchführt, welche zumindest die Sicherheitsschritte beinhaltet, bereits im Bearbeitungsprozess befindliche Proben fertig zu bearbeiten und anschließend in eine sichere Position zu überführen.

Das Überführen in eine sichere Position kann beispielsweise beinhalten, Proben in einem Objektträgermagazin abzulegen, wobei darüber hinaus insbesondere vorteilhaft vorgesehen sein kann, dass das Objektträgermagazin im Rahmen der Durchführung der Sicherheitsroutine anschließend zur Entnahme durch einen Benutzer zu einer Ausgabe, beispielsweise eine Ausgabeschublade, überführt wird.

Der Automat zum Bearbeiten oder Untersuchen von biologischen Proben kann beispielsweise als Färbeautomat ausgebildet sein. Insbesondere bei einem Färbeautomaten kann vorteilhaft vorgesehen sein, dass die Sicherheitsroutine beinhaltet, das Transportsystem in einen sicheren Zustand zu überführen. Alternativ oder zusätzlich kann die Sicherheitsroutine bei einem Färbeautomaten insbesondere beinhalten, die Parameter der gerade laufenden Färbeprogramme in einem, insbesondere nicht flüchtigen, Datenspeicher zu speichern. Auf diese Weise wird das Wiederanfahren erleichtert, weil durch auslesen des Datenspeichers auf die Parameter zurückgegriffen werden kann. Darüber hinaus kann vorteilhaft vorgesehen sein, dass die Sicherheitsroutine beinhaltet, dass ein im Transportvorgang befindliches Objektträgermagazin sicher abgestellt wird, um eine Beschädigung der Objektträger und/oder der darauf befindlichen Proben zu vermeiden und oder um zu verhindern, dass diese mit falschen Färbelösungen in Kontakt kommen.

Beispielsweise kann der Automat zum Bearbeiten oder Untersuchen von biologischen Proben auch als automatischer Prozessor oder als Einbettautomat oder als automatischer Scanner oder als automatisches Mikrotom ausgebildet sein. Auch bei derartigen Ausführungen ist es, insbesondere analog wie bei Ausbildungen als Eindeckautomat oder als Färbeautomat, vorteilhaft möglich, jeweils eine Sicherheitsroutine durchzuführen, die wenigstens einen der hier beispielhaft für einen Eindeckautomaten oder einen Färbeautomaten beschriebenen Sicherheitsschritte in analoger Weise durchführt.

Die oben erwähnten Automaten führen jeweils eine Vielzahl von Prozessschritten durch, von denen einige zeitkritisch sind, so dass es beim Unterschreiten oder Überschreiten der vorgesehenen Prozesszeit es zu einem Verlust oder einer Schädigung der jeweiligen Probe kommen kann. Beispielsweise kann ein Eintrocknen der Proben im Prozessor oder im Färbegerät oder das bereits erwähnte Eintrocknen des Einschlussmittels auf der noch nicht mit einem Deckglas versehenen Probe im Eindeckautomaten zu einer Schädigung der jeweiligen Probe führen. Außerdem gibt es Prozessschritte, bei denen vorgegebene Umgebungsparameter, insbesondere die Temperatur und/oder der Druck, eingehalten werden müssen. Insbesondere sind verschiedene Prozessschritte vorgesehen, bei denen die Proben unter einem bestimmten Druck, insbesondere bei einem Druck kleiner 1 bar, und/oder mit einer Mindesttemperatur, insbesondere einer Temperatur größer 20° C, bearbeitet werden müssen. Werden die vorgegebenen Umgebungsparameter nicht eingehalten, kann es zu einer Schädigung der jeweiligen Probe kommen.

In erfindungsgemäßer Weise kann vorteilhaft vorgesehen sein, dass die jeweilige Sicherheitsroutine des Automaten entsprechende Sicherheitsschritte durchführt, um unter Berücksichtigung dieser Aspekte eine Schädigung der Proben und der Automaten zu vermeiden. Hierzu gehört vorzugsweise, wichtiger Parameter, wie Druck und Temperatur wenigstens bis zum Abschluss der Sicherheitsroutine in dem Umfang aufrechtzuerhalten, dass eine Schädigung der Proben ausgeschlossen ist und/oder dass wichtige Prozessdaten, insbesondere im Hinblick auf einen Wiederanlauf im Normalbetrieb, zwischengespeichert werden.

Beispielsweise in einem automatischen Eindeckautomaten oder einem automatischen Scanner werden die in den Objektträgermagazin in angeordneten Objektträger automatisch einzeln entnommen und zu einer Bearbeitungsstation verbracht. Hierbei ist es wichtig, dass die Zuordnung der Objektträger zum jeweiligen Kassettenfach des Objektträgermagazins nicht verloren geht bzw. dass der Transportprozess abgeschlossen wird. Insbesondere diesbezüglich ist eine Zwischenspeicherung der relevanten Daten im Rahmen der Durchführung der Sicherheitsroutine von besonderem Vorteil.

Vor diesem Hintergrund ist ein System ganz allgemein und nach einem eigenständigen Erfindungsgedanken von besonderem Vorteil, bei dem zwei Automaten zum Bearbeiten oder Untersuchen von biologischen Proben in der Weise verbunden sind, dass elektrische Energie aus dem Energiespeicher eines der Geräte zu dem anderen Gerät im Bedarfsfall übertragbar ist, sonders vorteilhaft. Hierbei ist es, wie oben geschildert, möglich und von besonderem Vorteil, wenn wenigstens eines der Geräte als Eindeckautomat ausgebildet ist. Allerdings ist dies für die Umsetzung dieser eigenständigen erfinderischen Idee nicht zwingend notwendig. Es ist vielmehr auch möglich, dass das beschriebene System anstelle eines Eindeckautomaten einen anderen weiteren Automaten aufweist. Ganz allgemein ist es von Vorteil, zwei gleiche oder unterschiedliche Automaten in der beschriebenen Weise in einem System zu verbinden. Hierbei ist es möglich, dass jeder der Automaten als ein automatischer Scanner oder als ein Automat zum Einbetten von Proben in einen Paraffinblock oder als ein Färbeautomat oder als ein automatischer Prozessor oder als ein Eindeckautomat ausgebildet ist. Insoweit sind die nachfolgenden Beschreibungen besonderer Ausführungen, die auf ein System bezogen sind, das einen Eindeckautomaten beinhaltet, in erfindungsgemäßer Weise analog auch auf Systeme mit mehreren Automaten zum Bearbeiten oder Untersuchen von biologischen Proben anwendbar, die keinen Eindeckautomaten beinhalten.

Im Hinblick auf ein System, das einen erfindungsgemäßen Eindeckautomaten und wenigstens einen weiteren Automaten zum Bearbeiten oder Untersuchen von biologischen Proben beinhaltet, kann vorteilhaft vorgesehen sein, dass der weitere Automat einen weiteren elektrischen Energiespeicher beinhaltet und dass der Eindeckautomat und der weitere Automat in der Weise elektrisch verbunden oder verbindbar sind, dass elektrische Energie aus dem weiteren Energiespeicher zu dem Eindeckautomaten übertragbar ist und/oder dass elektrische Energie von dem Eindeckautomaten zu dem weiteren Automaten, insbesondere zu dem weiteren Energiespeicher, übertragbar ist. Auf diese Weise ist vorteilhaft erreicht, dass auch der weitere Automat im Bedarfsfall eine Sicherheitsroutine durchführen kann, wobei er auf die Energie aus seinem eigenen weiteren Energiespeicher zurückgreifen kann oder, insbesondere falls diese nicht ausreicht, mit elektrischer Energie aus dem Energiespeicher des Eindeckautomaten versorgt werden kann. Umgekehrt ist bei einer solchen Ausführung auch eine Versorgung des Eindeckautomaten mit elektrischer Energie aus dem weiteren Energiespeicher des weiteren Automaten im Bedarfsfall möglich, falls die elektrische Energie des Energiespeicher des Eindeckautomaten zum durchführen der Sicherheitsroutine des Eindeckautomaten nicht ausreichen sollte.

Insbesondere kann im Hinblick auf den weiteren Automaten vorteilhaft ganz allgemein vorgesehen sein, dass der weitere Automat Proben einem Magazin entnimmt und jeweils einen Bearbeitungsprozess durchführt, bei dem wenigstens ein Bearbeitungsschritt durchgeführt wird, und die bearbeitete Probe anschließend in dem Magazin oder in einem weiteren Magazin ablegt. Insbesondere ist es von besonderem Vorteil, wenn der Automat einen weiteren elektrischen Energiespeicher sowie eine weitere elektronische Steuerungsvorrichtung aufweist, die Störungen der Versorgung aus dem Stromnetz mit elektrischer Energie detektiert und im Falle einer Störung auf eine Entnahme von elektrischer Energie aus dem weiteren elektrischen Energiespeicher umschaltet und die eine weitere Sicherheitsroutine durchführt, welche zumindest die Sicherheitsschritte beinhaltet, bereits im Bearbeitungsprozess befindliche Proben fertig zu bearbeiten und anschließend in eine sichere Position zu überführen.

Wie in Bezug auf einen Eindeckautomaten bereits erwähnt, kann analog auch in Bezug auf einen weiteren Automaten vorteilhaft vorgesehen sein, dass für die Bearbeitung der Proben wichtige Bearbeitungsparameter und/oder Daten zur Identifizierung der einzelnen Proben in einem, insbesondere nicht flüchtigen, Datenspeicher abgelegt werden, um bei einem Wiederanfahren auf diese Daten zurückgreifen zu können. Dabei können die Daten zur Identifizierung der Proben insbesondere die bereits bearbeiteten Proben betreffen, so dass nach einem Wiederanfahren im Normalbetrieb zuverlässig nur die nicht bearbeiteten Proben bearbeitet werden.

Alternativ kann im Hinblick auf den weiteren Automaten vorteilhaft ganz allgemein auch vorgesehen sein, dass der weitere Automat Proben, die in Magazinen angeordnet sind, empfängt und an den jeweils in einem Magazin angeordneten Proben einen Bearbeitungsprozess durchführt, bei dem wenigstens ein Bearbeitungsschritt durchgeführt wird und anschließend das Magazin mit den gemeinsam bearbeiteten Proben ausgibt. Hierbei werden vorzugsweise bei dem Bearbeitungsprozess alle Proben, die in einem Magazin angeordnet sind, gleich und gleichzeitig behandelt. Der weitere Automat weist auch in dieser Ausführung vorzugsweise einen weiteren elektrischen Energiespeicher und eine weitere elektronische Steuerungsvorrichtung auf, die Störungen der Versorgung aus dem Stromnetz mit elektrischer Energie detektiert und im Falle einer Störung auf eine Entnahme von elektrischer Energie aus dem weiteren elektrischen Energiespeicher umschaltet und die eine weitere Sicherheitsroutine durchführt, welche zumindest die Sicherheitsschritte beinhaltet, bereits im Bearbeitungsprozess befindliche Magazine mit Proben fertig zu bearbeiten und anschließend in eine sichere Position zu überführen. Auch in Bezug auf einen solchen weiteren Automaten kann vorteilhaft insbesondere vorgesehen sein, dass für die Bearbeitung Magazine und/oder er darin befindlichen Proben wichtige Bearbeitungsparameter und/oder Daten zur Identifizierung der einzelnen Magazine und/oder Proben in einem, insbesondere nicht flüchtigen, Datenspeicher abgelegt werden, um bei einem Wiederanfahren auf diese Daten zurückgreifen zu können. Dabei können die Daten zur Identifizierung insbesondere die bereits bearbeiteten Magazine betreffen, so dass nach einem Wiederanfahren im Normalbetrieb zuverlässig nur die nicht bearbeiteten Magazine bearbeitet werden.

Beispielsweise kann es sich bei einem solchen weiteren Automaten vorteilhaft um einen Färbeautomaten handeln, bei dem Magazine samt den darin befindlichen Proben nacheinander in verschiedene Bäder, insbesondere Bäder mit Färbechemikalien, eingetaucht werden. Hierbei kann vorgesehen sein, dass alle Magazine dieselbe Abfolge von Bädern durchlaufen. Es ist vorteilhaft jedoch auch möglich, dass unterschiedliche Magazine unterschiedliche Kombinationen von Bädern durchlaufen, um die Proben, die in einem Magazin angeordnet sind, einem anderen Färbeprozess zu unterziehen, als die Proben, die in einem anderen Magazin angeordnet sind. Insbesondere hierbei ist es wichtig, dass für die Bearbeitung Magazine und/oder er darin befindlichen Proben wichtige Bearbeitungsparameter und/oder Daten zur Identifizierung der einzelnen Magazine und/oder Proben im Falle einer Störung der Netzstromversorgung in einem, insbesondere nicht flüchtigen, Datenspeicher abgelegt werden, insbesondere um Probleme bei einem Wiederanlaufen zu vermeiden.

Besonders vorteilhaft ist eine mögliche Ausführung eines erfindungsgemäßen Systems, das einen Eindeckautomaten und einen als Färbeautomaten ausgebildeten weiteren Automaten aufweist. Hierbei kann insbesondere vorteilhaft vorgesehen sein, dass der Eindeckautomat und der Färbeautomat derart verkoppelt sind, dass der Eindeckautomat Objektträgermagazine mit fertig eingedeckten Proben automatisch an den Färbeautomaten übergeben kann, der anschließend einen Färbeprozess an den in dem Objektträgermagazin angeordneten Proben vornimmt.

Hierbei kann insbesondere vorteilhaft vorgesehen sein, dass die Steuerungsvorrichtung des Eindeckautomaten oder eine weitere Steuerungsvorrichtung des weiteren Automaten die elektrische Verbindung, insbesondere automatisch, herstellt, wenn sie eine Störung der Versorgung aus dem Stromnetz mit elektrischer Energie detektiert.

Ganz besonders vorteilhaft ist eine Ausführung, bei der die Steuerungsvorrichtung die elektrische Verbindung, insbesondere automatisch, herstellt, wenn sie eine Störung der Versorgung aus dem Stromnetz mit elektrischer Energie detektiert und feststellt, dass der aktuelle Ladezustand des Energiespeichers zur Durchführung der Sicherheitsroutine voraussichtlich nicht ausreicht. Alternativ oder zusätzlich kann auch vorgesehen sein, dass die weitere Steuerungsvorrichtung des weiteren Automaten die elektrische Verbindung, insbesondere automatisch, herstellt, wenn sie eine Störung der Versorgung aus dem Stromnetz mit elektrischer Energie detektiert und feststellt, dass der aktuelle Ladezustand des weiteren Energiespeichers zur Durchführung der weiteren Sicherheitsroutine voraussichtlich nicht ausreicht.

Bei einer vorteilhaften Ausführung steuert die Steuerungsvorrichtung die Übertragung elektrischer Energie von dem Eindeckautomaten zu dem weiteren Automaten und/oder die Übertragung elektrischer Energie von dem weiteren Automaten zu dem Eindeckautomaten, insbesondere bedarfsgerecht. Alternativ ist es auch möglich, dass die weitere Steuerungsvorrichtung des weiteren Automaten die Übertragung elektrischer Energie von dem Eindeckautomaten zu dem weiteren Automaten und/oder die Übertragung elektrischer Energie von dem weiteren Automaten zu dem Eindeckautomaten, insbesondere bedarfsgerecht, steuert.

Bei einer ganz besonders vorteilhaften Ausführung des Systems steuern die Steuerungsvorrichtung und eine weitere Steuerungsvorrichtung des weiteren Automaten gemeinsam die Übertragung elektrischer Energie von dem Eindeckautomaten zu dem weiteren Automaten und/oder die Übertragung elektrischer Energie von dem weiteren Automaten zu dem Eindeckautomaten, insbesondere bedarfsgerecht. Insbesondere hierbei kann vorteilhaft vorgesehen sein, die Steuerungsvorrichtung Daten über den Ladezustand und/oder die voraussichtliche Restlaufzeit des Energiespeichers an die weitere Steuerungsvorrichtung überträgt und/oder dass die weitere Steuerungsvorrichtung Daten über den Ladezustand des weiteren Energiespeicher des und/oder der voraussichtlichen Restlaufzeit des weiteren Energiespeichers an die Steuerungsvorrichtung überträgt.

Der weitere Automat kann beispielsweise ein automatischer Scanner oder ein Automat zum Einbetten von Proben in einen Paraffinblock oder ein Färbeautomat oder ein automatischer Prozessor oder ein weiterer Eindeckautomat sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch ein Ausführungsbeispiel eines erfindungsgemäßen Eindeckautomaten,
- Fig. 2: schematisch ein Ausführungsbeispiel eines Systems, das einen Eindeckautomaten und weitere Automaten beinhaltet, und
- Fig. 3: schematisch ein anderes Ausführungsbeispiel eines Systems, das einen Eindeckautomaten und mehrere weitere Automaten beinhaltet.

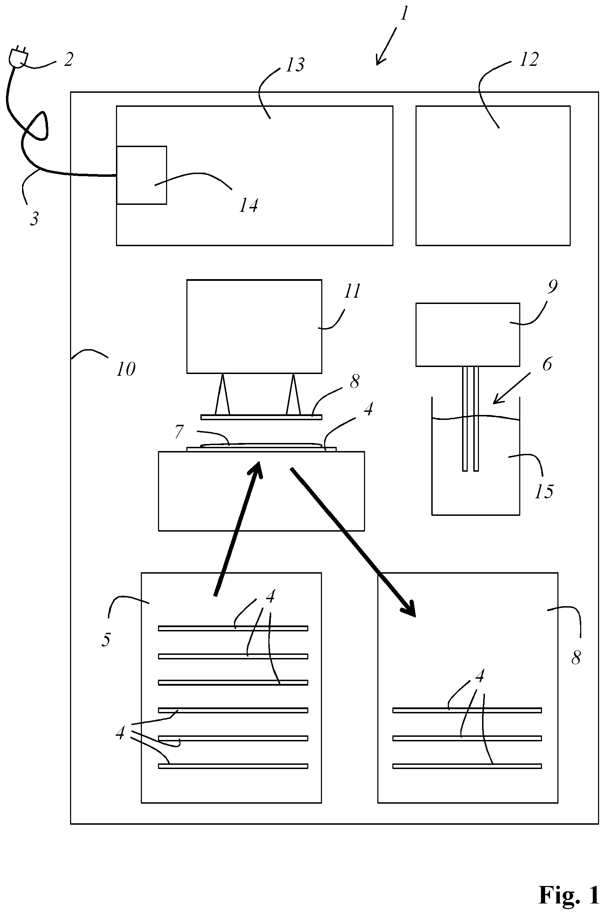

Figur 1 zeigt ganz schematisch ein Ausführungsbeispiel eines erfindungsgemäßen Eindeckautomaten 1. Der Eindeckautomat 1 weist einen Netzstecker 2 und ein Anschlusskabel 3 auf, mittels dem er an ein (nicht dargestelltes) elektrisches Stromnetz angeschlossen werden kann. Der Eindeckautomat 1 ist dazu ausgebildet, Objektträger 4 mit darauf befindlichen Proben einem Objektträgermagazin 5 zu entnehmen und einem Eindeckprozess zuzuführen, bei dem auf jeden Objektträger 4 mittels einer Hohlnadel 6 ein Einschlussmittel 7 und anschließend ein Deckglas 8 aufgebracht wird.

Die Hohlnadel 6 kann motorisch gesteuert mittels eines Manipulators 9 innerhalb des Gehäuses 10 des Eindeckautomaten 1 bewegt werden. Insbesondere ist vorgesehen, dass sich die Hohlnadel 6 beim Ausbringen von Einschlussmittel 7 relativ zu dem jeweils gerade einzudeckenden Objektträger 4 bewegt, um das Einschlussmittel 7 auf dem Objektträger 4 zu verteilen.

Die aufzubringenden Deckgläser 8 werden mittels eines weiteren Manipulators 11 einem (nicht dargestellten) Vorratsbehälter einzeln entnommen und zu dem gerade in Bearbeitung befindlichen Objektträger 4 transportiert. Nach dem Aufbringen des Deckglases wird der jeweils gerade eingedeckte Objektträger 4 in einem weiteren Objektträgermagazin 8 abgelegt.

Im Normalbetrieb wird die erforderliche Energie zum Durchführen der zum Eindecken erforderlichen Schritte dem elektrischen Stromnetz entnommen, an das der Eindeckautomat 1 über den Netzstecker 2 und das Anschlusskabel 3 angeschlossen ist.

Der Eindeckautomat 1 weist einen elektrischen Energiespeicher 12 und eine elektronische Steuerungsvorrichtung 13 auf. Die elektronische Steuerungsvorrichtung 13 ist dazu ausgebildet, Störungen der Versorgung aus dem Stromnetz mit elektrischer Energie, an das der Eindeckautomat 1 angeschlossen ist, mittels eines Sensors 14 zu detektieren. Im Falle einer Störung schaltet die Steuerungsvorrichtung 14 auf eine Entnahme von elektrischer Energie aus dem elektrischen Energiespeicher 12 um und führt eine Sicherheitsroutine durch, welche zumindest die Sicherheitsschritte beinhaltet, bereits mit dem Einschlussmittel 7 versehene Objektträger 4 fertig einzudecken, also mit einem Deckglas 7 zu versehen, und anschließend in dem weiteren Objektträgermagazin 8 ordnungsgemäß abzulegen.

Die Sicherheitsroutine beinhaltet als weiteren Sicherheitsschritt außerdem, die Hohlnadel 6 in ein Lösungsbad 15 einzutauchen, das ein Lösungsmittel beinhaltet, um ein Eintrocknen des Einschlussmittels 7 in der Hohlnadel 6 zu verhindern.

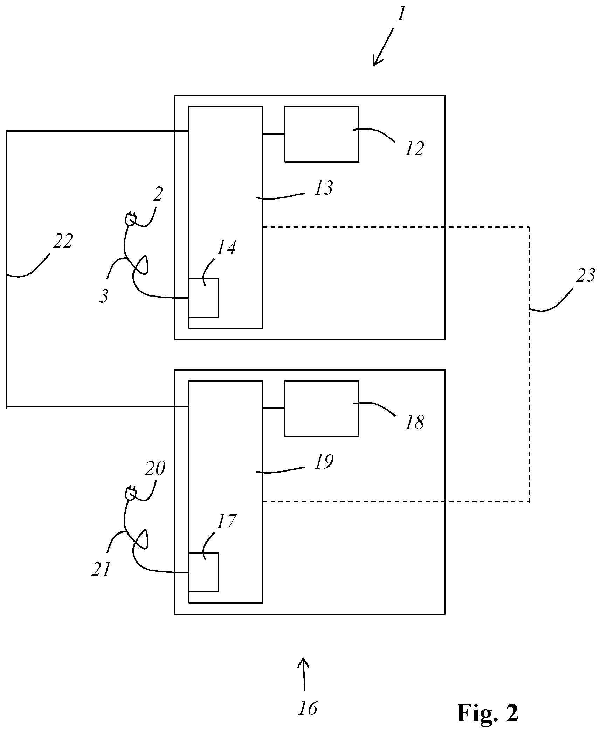

Figur 2 zeigt ein System, das ein Ausführungsbeispiel eines erfindungsgemäßen Eindeckautomaten 1 beinhaltet. Der Eindeckautomat 1 ist lediglich unvollständig und schematisch dargestellt, wobei der besseren Übersichtlichkeit halber lediglich Der Netzstecker 2, das Anschlusskabel 3, der Energiespeicher 12 und die Steuerungsvorrichtung 13 samt Sensor 14 eingezeichnet sind, während die übrigen Komponenten des Eindeckautomaten 1 nicht eingezeichnet sind.

Das System beinhaltet außerdem einen weiteren Automaten 16, der beispielsweise als Prozessor 24, als Einbettautomat 25, als automatisches Mikrotom 26, als Färbeautomat 27 oder als automatischer Scanner 28 ausgebildet sein kann. Der weitere Automat Prozessor 16 beinhaltet einen weiteren Energiespeicher 18 sowie eine weitere Steuerungsvorrichtung 19 mit einem weiteren Sensor 17. Der weitere Automat 16 ist genauso wie der Eindeckautomat 1 dazu ausgebildet, zur Versorgung mit elektrischer Energie als Verbraucher an ein elektrisches Stromnetz angeschlossen zu werden und weist hierfür einen weiteren Netzstecker 20 und ein weiteres Anschlusskabel 21 auf.

Insbesondere kann der weitere Automat 16 dazu ausgebildet sein, (nicht dargestellte) Proben einem (nicht dargestellten) Magazin zu entnehmen und jeweils einen Bearbeitungsprozess durchzuführen, bei dem wenigstens ein Bearbeitungsschritt durchgeführt wird, und anschließend die bearbeitete Probe in dem Magazin oder in einem (nicht dargestellten) weiteren Magazin abzulegen. Auch der weitere Automat 16 ist dazu ausgebildet, Störungen der Versorgung aus dem Stromnetz mit elektrischer Energie zu detektieren und im Falle einer Störung auf eine Entnahme von elektrischer Energie aus dem weiteren elektrischen Energiespeicher 18 umzuschalten sowie eine Sicherheitsroutine durchzuführen. Die Sicherheitsroutine kann hierbei vorteilhaft insbesondere beinhalten, bereits im Bearbeitungsprozess befindliche Proben fertig zu bearbeiten und anschließend in eine sichere Position zu überführen.

Der Eindeckautomat 1 und der weitere Automat 16 sind über eine Versorgungsleitung 22 in der Weise elektrisch verbunden, dass elektrische Energie aus dem Energiespeicher 12 des Eindeckautomaten 1 zu dem weiteren Automaten 16 übertragbar ist und/oder dass elektrische Energie von dem weiteren Automaten 16, nämlich von dessen Energiespeicher 18, zu dem Energiespeicher 12 des Eindeckautomaten 1 übertragbar ist.

Darüber hinaus ist eine Datenverbindung 23 vorhanden, über die die Steuerungsvorrichtung 13 und die weitere Steuerungsvorrichtung 19 Daten über den aktuellen Ladezustand und/oder über eine vorausberechnete Restlaufzeit auszutauschen. Die Daten werden dazu verwendet, die vorhandene Energie des Energiespeichers 12 und des weiteren Energiespeichers 19 bedarfsgerecht aufzuteilen, damit der Eindeckautomat 1 und der weitere Automat 16 bei einer Störung der Netzstromversorgung jeweils ihre Sicherheitsroutine durchführen können, um Schäden an den Proben oder an den Geräten zu verhindern.

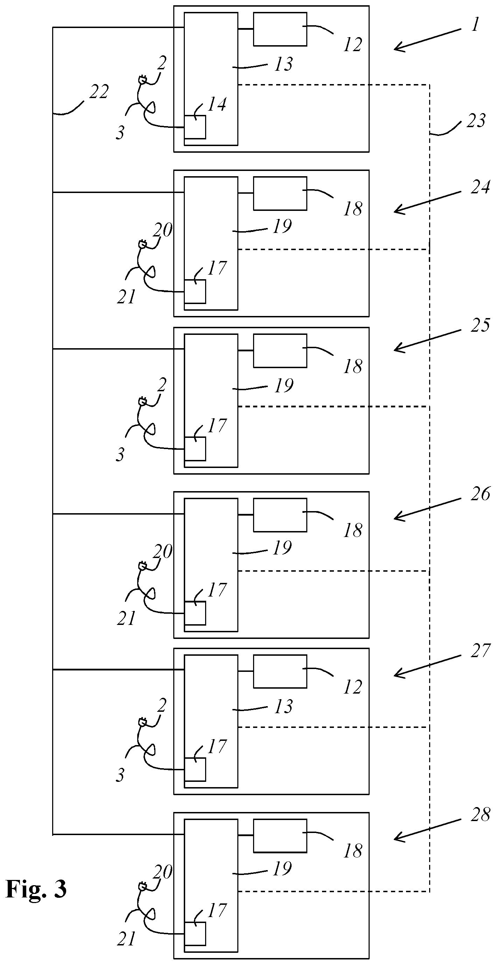

Figur 3 zeigt ein anderes Ausführungsbeispiel eines Systems, das einen Eindeckautomaten 1 und weitere Automaten beinhaltet. Die weiteren Automaten sind als Prozessor 24, Einbettautomat 25, automatisches Mikrotom 26, Färbeautomat 27 und als automatischer Scanner 28 ausgebildet. Jeder dieser Automaten weist einen weiteren Energiespeicher 18 und eine weitere Steuerungsvorrichtung 19 auf, wobei der Energiespeicher 12 sowie die weiteren Energiespeicher 18 über die Steuerungsvorrichtung 13 bzw. die weiteren Steuerungsvorrichtungen 19 und eine Versorgungsleitung 22 miteinander verbunden sind, um eine bedarfsgerechte Aufteilung der im Falle eines Ausfalls der Netzstromversorgung zur Verfügung stehenden elektrischen Energie bedarfsgerecht zwischen den Automaten 1, 24, 25, 27, 27 aufteilen zu können. Hierfür ist vorteilhaft vorgesehen, dass Daten über die Ladezustände und den voraussichtlichen Energiebedarf zur Durchführung der jeweiligen Sicherheitsroutine zwischen den Automaten 1, 24, 25, 27, 27 ausgetauscht werden, um die zur Verfügung stehende elektrische Energie des Energiespeichers 12 und der weiteren Energiespeicher 18 bedarfsgerecht derart aufzuteilen, dass jeder Automat 1, 24, 25, 27, 27 seine Sicherheitsroutine vollständig durchführen kann.

### Bezugszeichenliste:

- 1: Eindeckautomat
- 2: Netzstecker
- 3: Anschlusskabel
- 4: Objektträger
- 5: Objektträgermagazin
- 6: Hohlnadel
- 7: Einschlussmittel
- 8: Deckglas
- 9: Manipulator
- 10: Gehäuse
- 11: Weiterer Manipulator
- 12: Energiespeicher
- 13: Steuerungsvorrichtung
- 14: Sensor
- 15: Lösungsbad
- 16: weiterer Automat
- 17: weiterer Sensor
- 18: weiterer Energiespeicher
- 19: weitere Steuerungsvorrichtung
- 20: weiterer Netzstecker
- 21: weiteres Anschlusskabel
- 22: Versorgungsleitung
- 23: Datenverbindung
- 24: Prozessor
- 25: Einbettautomat
- 26: automatisches Mikrotom
- 27: Färbeautomat
- 28: automatischer Scanner

## Patentansprüche

1. System beinhaltend zwei Automaten zum Bearbeiten oder Untersuchen von biologischen Proben, nämlich einen Automaten und einen weiteren Automaten, die in der Weise verbunden sind, dass elektrische Energie aus einem Energiespeicher (12) eines der Automaten zu dem anderen Automaten im Bedarfsfall übertragbar ist.

2. System nach Anspruch 1, **dadurch gekennzeichnet, dass** wenigstens einer der Automaten als Eindeckautomat ausgebildet ist.

3. System nach Anspruch 2, **dadurch gekennzeichnet, dass** der Eindeckautomat (1) dazu ausgebildet ist, zur Versorgung mit elektrischer Energie als Verbraucher an ein elektrisches Stromnetz angeschlossen zu werden und das der Eindeckautomat (1) Objektträger (4) mit darauf befindlichen Proben einem Objektträgermagazin (5) entnimmt und jeweils einen Eindeckprozess durchführt, bei dem auf jeden Objektträger (4) ein Einschlussmittel (7) und anschließend ein Deckglas (8) aufgebracht wird, und der die eingedeckten Objektträger (4) in dem Objektträgermagazin (5) oder in einem weiteren Objektträgermagazin (5) ablegt, wobei der Eindeckautomat (1) den elektrischen Energiespeicher (12) aufweist und eine elektronische Steuerungsvorrichtung (13) aufweist, die Störungen der Versorgung aus dem Stromnetz mit elektrischer Energie detektiert und im Falle einer Störung auf eine Entnahme von elektrischer Energie aus dem elektrischen Energiespeicher (12) umschaltet und die eine Sicherheitsroutine durchführt, welche zumindest die Sicherheitsschritte beinhaltet, bereits mit dem Einschlussmittel (7) versehene Objektträger (4) fertig einzudecken und anschließend in dem Objektträgermagazin (5) oder in dem weiteren Objektträgermagazin (8) abzulegen.

4. System nach Anspruch 3, **dadurch gekennzeichnet, dass** die Sicherheitsroutine zumindest einen der folgenden weiteren Sicherheitsschritte beinhaltet:
a. Verbringen von dem Objektträgermagazin (5) entnommene und noch nicht mit Einschlussmittel (7) versehene Objektträger (4) zurück in das Objektträgermagazin (5),
b. Eintauchen einer zum Aufbringen von Einschlussmittel (7) dienenden Hohlnadel (6) in ein Lösungsmittelbad (15),
c. Überführen des Objektträgermagazins (5) und/oder des weiteren Objektträgermagazins (8) zur Entnahme durch den Benutzer an eine Ausgabe.

5. System nach Anspruch 3 oder 4, **dadurch gekennzeichnet, dass**
a. die Sicherheitsroutine beinhaltet, während der Durchführung der Sicherheitsschritte wenigstens einen Energieverbraucher des Eindeckautomaten (1) abzuschalten, der nicht zur Durchführung wenigstens eines Sicherheitsschritts erforderlich ist, und/oder dass
b. die Sicherheitsroutine beinhaltet, die Komponenten des Eindeckautomaten (1) in einen Zustand zu überführen, aus dem ein Wiederanfahren im Normalbetrieb beschädigungsfrei möglich ist.

6. System nach einem der Ansprüche 3 bis 5, **dadurch gekennzeichnet, dass** der Automat nach Durchführen der Sicherheitsroutine in einen Normalbetrieb zurückschaltbar ist, wobei die Steuerungsvorrichtung (13) ein Zurückschalten nur zulässt, wenn keine Störung der Versorgung aus dem Stromnetz mit elektrischer Energie mehr vorliegt und/oder wenn der elektrische Energiespeicher (12) einen vorbestimmten oder vorbestimmbaren Mindestladezustand aufweist.

7. System nach einem der Ansprüche 3 bis 6, **dadurch gekennzeichnet, dass**
a. die Steuerungsvorrichtung (13) nach Durchführen der Sicherheitsroutine automatisch in einen Normalbetrieb zurückschaltet, wenn sie detektiert, dass keine Störung der Versorgung aus dem Stromnetz mit elektrischer Energie mehr vorliegt, oder dass
b. die Steuerungsvorrichtung (13) nach Durchführen der Sicherheitsroutine automatisch in einen Normalbetrieb zurückschaltet, wenn sie detektiert, dass keine Störung der Versorgung aus dem Stromnetz mit elektrischer Energie mehr vorliegt, und der elektrische Energiespeicher (12) einen vorbestimmten oder vorbestimmbaren Mindestladezustand aufweist.

8. System nach einem der Ansprüche 1 bis 7, **dadurch gekennzeichnet, dass** der Automat und der weitere Automat (16) dazu ausgebildet sind, zur Versorgung mit elektrischer Energie als Verbraucher an ein elektrisches Stromnetz angeschlossen zu werden.

9. System nach einem der Ansprüche 1 bis 8, **dadurch gekennzeichnet, dass** der Automat den elektrischen Energiespeicher (12) aufweist und dass der weitere Automat (16) einen weiteren elektrischen Energiespeicher (18) beinhaltet.

10. System nach einem der Ansprüche 1 bis 9, **dadurch gekennzeichnet, dass** der weitere Automat
a. Proben einem Magazin entnimmt und jeweils einen Bearbeitungsprozess durchführt, bei dem wenigstens ein Bearbeitungsschritt durchgeführt wird, und die bearbeitete Probe anschließend in dem Magazin oder in einem weiteren Magazin ablegt, und
b. einen weiteren elektrischen Energiespeicher (18) aufweist und
c. eine weitere elektronische Steuerungsvorrichtung (19) aufweist, die Störungen der Versorgung aus dem Stromnetz mit elektrischer Energie detektiert und im Falle einer Störung auf eine Entnahme von elektrischer Energie aus dem weiteren elektrischen Energiespeicher (18) umschaltet und die eine weitere Sicherheitsroutine durchführt, welche zumindest die Sicherheitsschritte beinhaltet, bereits im Bearbeitungsprozess befindliche Proben fertig zu bearbeiten und anschließend in eine sichere Position zu überführen.

11. System nach Anspruch 10, **dadurch gekennzeichnet, dass** der weitere Automat
a. Proben, die in Magazinen angeordnet sind, empfängt und an den jeweils in einem Magazin angeordneten Proben einen Bearbeitungsprozess durchführt, bei dem wenigstens ein Bearbeitungsschritt durchgeführt wird, und anschließend das Magazin mit den gemeinsam bearbeiteten Proben ausgibt, und
b. einen weiteren elektrischen Energiespeicher (18) aufweist und
c. eine weitere elektronische Steuerungsvorrichtung (19) aufweist, die Störungen der Versorgung aus dem Stromnetz mit elektrischer Energie detektiert und im Falle einer Störung auf eine Entnahme von elektrischer Energie aus dem weiteren elektrischen Energiespeicher (18) umschaltet und die eine weitere Sicherheitsroutine durchführt, welche zumindest die Sicherheitsschritte beinhaltet, bereits im Bearbeitungsprozess befindliche Magazine mit Proben fertig zu bearbeiten und anschließend in eine sichere Position zu überführen.

12. System nach einem der Ansprüche 1 bis 11, **dadurch gekennzeichnet, dass**
a. eine Steuerungsvorrichtung (13) des Automaten oder eine weitere Steuerungsvorrichtung (19) des weiteren Automaten (16) die elektrische Verbindung, insbesondere automatisch, herstellt, wenn sie eine Störung der Versorgung aus dem Stromnetz mit elektrischer Energie detektiert, oder dass
b. eine Steuerungsvorrichtung (13) des Automaten die elektrische Verbindung, insbesondere automatisch, herstellt, wenn sie eine Störung der Versorgung aus dem Stromnetz mit elektrischer Energie detektiert und feststellt, dass der aktuelle Ladezustand des Energiespeichers (12) zur Durchführung der Sicherheitsroutine voraussichtlich nicht ausreicht, oder dass
c. die weitere Steuerungsvorrichtung (19) des weiteren Automaten (16) die elektrische Verbindung, insbesondere automatisch, herstellt, wenn sie eine Störung der Versorgung aus dem Stromnetz mit elektrischer Energie detektiert und feststellt, dass der aktuelle Ladezustand des weiteren Energiespeichers (18) zur Durchführung der weiteren Sicherheitsroutine voraussichtlich nicht ausreicht.

13. System nach einem der Ansprüche 3 bis 12, **dadurch gekennzeichnet, dass**
a. eine Steuerungsvorrichtung (13) des Automaten die Übertragung elektrischer Energie von dem Automaten (1) zu dem weiteren Automaten (16) und/oder die Übertragung elektrischer Energie von dem weiteren Automaten (16) zu dem Automaten (1), insbesondere bedarfsgerecht, steuert, oder dass
b. eine weitere Steuerungsvorrichtung (19) des weiteren Automaten die Übertragung elektrischer Energie von dem Automaten (1) zu dem weiteren Automaten (16) und/oder die Übertragung elektrischer Energie von dem weiteren Automaten (16) zu dem Automaten (1), insbesondere bedarfsgerecht, steuert, oder dass
c. eine Steuerungsvorrichtung (13) des Automaten und eine weitere Steuerungsvorrichtung (19) des weiteren Automaten (16) gemeinsam die Übertragung elektrischer Energie von dem Automaten zu dem weiteren Automaten (16) und/oder die Übertragung elektrischer Energie von dem weiteren Automaten (16) zu dem Automaten, insbesondere bedarfsgerecht, steuern.

14. System nach einem der Ansprüche 1 bis 13, **dadurch gekennzeichnet, dass**
a. eine Steuerungsvorrichtung (13) des Automaten Daten über Ladezustand des Energiespeichers (12) und/oder Restlaufzeit des Energiespeichers (12) und/oder voraussichtlichen Energiebedarf zur Durchführung der Sicherheitsroutine des Eindeckautomaten (1) an die weitere Steuerungsvorrichtung (19) überträgt und/oder dass
b. eine weitere Steuerungsvorrichtung (19) des weiteren Automaten Daten über Ladezustand des weiteren Energiespeichers (18) und/oder Restlaufzeit des weiteren Energiespeichers (18) und/oder voraussichtlichen Energiebedarf zur Durchführung der Sicherheitsroutine des weiteren Automaten an die Steuerungsvorrichtung (13) überträgt.

15. System nach einem der Ansprüche 1 bis 14, **dadurch gekennzeichnet, dass** der Automat ein automatischer Scanner (28) oder ein Einbettautomat (25) oder ein automatisches Mikrotom (26) oder ein Färbeautomat (27) oder ein automatischer Prozessor (24) oder ein weiterer Eindeckautomat ist und/oder dass der weitere Automat (16) ein automatischer Scanner (28) oder ein Einbettautomat (25) oder ein automatisches Mikrotom (26) oder ein Färbeautomat (27) oder ein automatischer Prozessor (24) oder ein weiterer Eindeckautomat ist.
